# EUROPEAN PATENT APPLICATION

(11) **EP 1 994 831 A1**
(43) Date of publication of application: **26.11.2008**
(21) Application number: 08151347.5
(22) Date of filing: 13.02.2008
(51) Int. Cl.: A23C 9/13, A23C 9/154, A23L 1/164, B65D 85/816

(54) **Food product**

(30) Priority: 13.02.2007 NL 1033389
(71) Applicant: A.A. ter Beek B.V., 7602 PA Almelo (NL)
(72) Inventor: Braakhuis-Fortkamp, Natascha Aleida Emma, 7667 PD Reutum (NL); Weekamp, Johannes Antonius, 7777 RB Schuinesloot (NL)
(74) Representative: Hatzmann, Martin

(57) **Abstract**

The invention relates to a food product, comprising a series of elements having a network of proteins, carbohydrates and/or fats, gelatinized and/or stabilized, and a dairy product in dry form, which dairy product is at least largely soluble in water, and a method for forming a food product, wherein elements, in particular cereals are manufactured, which are provided with a coating which comprises at least a dairy product in a water-soluble form, in particular a powder form, and preferably, further, a sweetener, whereupon the coated elements are confined in a package, in relatively dry form.

## Description

The invention relates to a food product, in particular a food product based on cereals.

Food products based on cereals are known per se. In general, cereals manufactured from, for instance, popped cereal and fruits are offered, which products can be mixed by a user with, for instance, milk or yogurt or similar dairy products.

In a first known embodiment, the cereals are packaged in for instance a cardboard box or poured into a bowl or mug, whereupon the diary product is poured over it.

In a second known embodiment, the cereals are included in a compartment of a package, separated from yogurt included in a second compartment in the same package. An advantage of such a package is that the cereals contact the yogurt only immediately prior to consumption so that the consistency and the taste of the cereals is conserved until they are consumed. If the cereals are to be included directly into the yogurt and be thus packaged, there is the risk that the cereals may grow soft or that the yogurt is influenced by the cereals. This is important in particular with, for instance, relatively crispy cereals. In an alternative embodiment, the yogurt or milk is mixed with the cereals only when the package is put directly to the mouth. Here too, the cereals and the yogurt or milk are stored separately from each other prior to opening of the package. One of the drawbacks of such a package is that it should be packaged, stored and transported in cooled condition.

In a third known embodiment, the cereals are packaged in a mug, sealed off by a pull-off lid. A user can open the package, whereupon yogurt can be poured over the cereals. An advantage of such a package is that the cereals can be packaged and stored separately from the yogurt. A drawback of this package is that here too, the yogurt is to be packaged, transported and stored in cooled condition.

DE19716001 describes a mixture of muesli and milk or yogurt powder. By adding water, a liquid mixture can be obtained that is directly suitable for consumption. Muesli is a composition of different natural products such as wheat flakes, raisins and dried fruits. Muesli is little susceptible to moisture and can therefore be stored relatively long. Muesli has a relatively dense structure with relatively many fibers. For many consumers, this is a less desirable taste sensation.

The object of the invention is to provide a food product that provides an enjoyable taste sensation and which is easy in use. To that end, a food product according to the invention is characterized by the features of claim 1.

A food product according to the invention comprises a series of elements having a network of proteins, carbohydrates and/or fats, gelatinized and/or stabilized, and a dairy product in dry form, which dairy product is at least largely soluble in water.

Through the combination of elements having a network of proteins, carbohydrates and/or fats which are gelatinized and/or stabilized and a dried dairy product, a food product is offered to which water can be added for obtaining a mixture of a liquid dairy product and crispy elements. This mixture has a special, pleasant taste sensation that clearly deviates from that of the mass as known from DE19716001. In particular, the network provides a crispy bite in a dairy product.

A food product according to the invention can be utilized by simply adding water to the food product, so that the diary product will substantially dissolve in the water and the dairy product will be formed in, for instance, liquid form with low or relatively high viscosity, with the elements such as cereals therein. As, prior to the water being added, the food product is substantially dry, the consistency of the elements is maintained, as is, for instance, the taste or aroma. Furthermore, diary products in relatively dry form have a relatively long storage life, also in a non-cooled environment, so that manufacture, storage and transport are simple. Furthermore, a user need not have yogurt, milk or another dairy product at hand for consuming a food product according to the invention.

In a first embodiment, the dairy product mentioned is at least partly provided in the form of a coating or included in the coating. Preferably, a coating is used that prevents moisture from entering the elements, so that the crispiness of the network is maintained for a longer period of time, for instance days or weeks, when these are included in the dry dairy product.

In a second embodiment, the diary product is at least partly provided with the edible elements in loose condition, in particular as a powder. The elements can be mixed therewith and/or be placed thereon or thereunder. Naturally, a coating of or with dairy product can be combined with loose dairy product.

In a food product according to the invention, crispy elements such as cereals can be used, manufactured, for instance, as or from baked dough. In particular, pieces of knackebrod can be used.

As dairy product, for instance milk powder or yogurt powder can be used. Such dry powders have a particularly long shelf life and can easily be mixed with water for forming milk or yogurt, respectively. Furthermore, such powder is relatively light, so that particularly, but not exclusively, transport weight is economized on.

The invention further relates to a package with a food product according to the invention therein. In particular, the food product is included in the package in relatively dry condition.

In a first embodiment, the package comprises a mug. The food product is then offered preferably sealed in the mug and can be mixed in the mug with water for obtaining the desired end product, for instance milk or yogurt with edible elements.

The invention further relates to an edible product, provided with an at least partly water-soluble coating which comprises at least one dairy product.

In a first embodiment, the coating furthermore comprises a sweetener, such as glucose or dextrose. Furthermore, additives can be included in the coating, such as odorants and flavours and emulsifiers.

The invention further relates to a method for offering a food product, wherein it is offered in a closed package, as mixture of at least an amount of cereals and a dairy product in dry form.

In a first embodiment, the food product is offered in a package which, after opening, defines an opening through which water can be poured into the package and through which the food product together with the water can be consumed. Here, the package forms, in particular, a mug from which the food product, after mixing with water, can be drunk.

In this description, water is at least but not exclusively understood to include a liquid which consists at least partly from water, such as tap water, mineral water, fruit juices and the like. In this description, cereals are understood to include at least, but not exclusively, elements having a network of gelatinized and/or baked chains of, for instance, starch, and can be coated or not be coated. Examples of such baked products, to which this description is expressly not limited, may be bread, knackebrod, biscuits, rusk, gingerbread snaps and such bakery products.

In clarification of the invention, examples of embodiments of the invention will be described on the basis of the drawing. In the drawing:
Fig. 1 shows a closed package, in partial cross section, with a food product according to the invention therein;
Fig. 2 shows an opened package according to Fig. 1, with a food product according to the invention therein, mixed with water;
Fig. 3 schematically shows, in cross sectional view, a food product according to the invention, in the form of a coated cereal;
Fig. 4 schematically shows method steps for the manufacture of a food product according to the invention.

In this description, identical or corresponding parts have identical or corresponding reference numerals. The exemplary embodiments shown are shown merely by way of illustration and should not be construed to be limitative in any manner.

In this description, terms used such as approximately or substantially and the like are understood to mean that a deviation of at least 10% of the given value is possible within the invention, unless expressly stated otherwise.

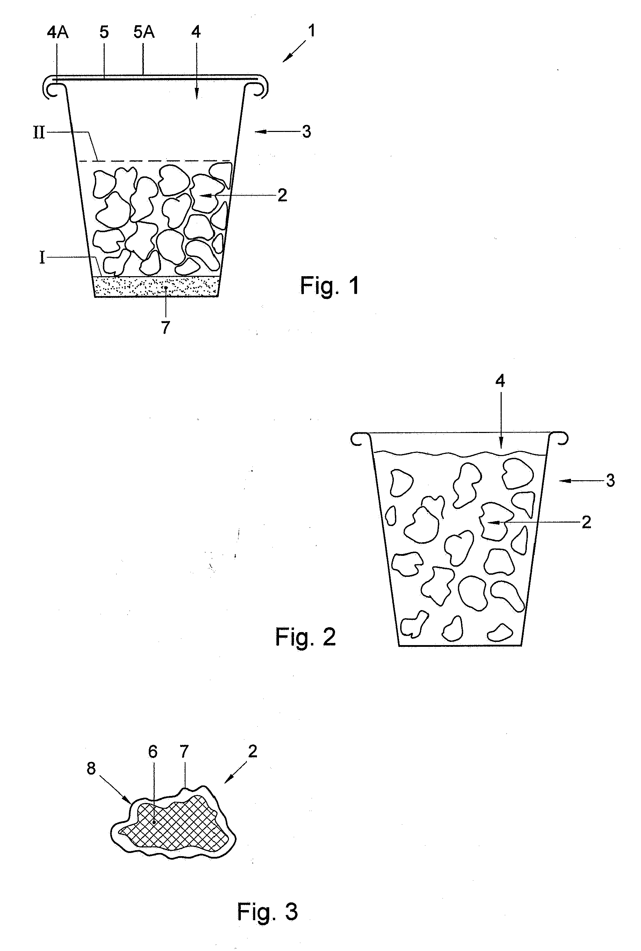

Figs. 1 and 2 show, in partly cross-sectional side view, a package 1 with a food product 2 according to the invention therein. In this embodiment, the package 1 comprises a mug-shaped part 3, manufactured from, for instance, plastic or cardboard, having an opening 4 on the top which, in the closed position shown in Fig. 1, is sealed off by a lid 5. In the exemplary embodiment shown, the lid 5 is manufactured from foil material which is secured on a circumferential edge 4A of the opening 4 through, for instance, sealing or gluing, so that the lid seals off preferably in an airtight manner and can still be easily removed. Optionally, instead of or over this foil lid, another lid 5A can be utilized, for instance from plastic, which is clamped over the circumferential edge as is schematically shown in Fig. 1. With such a lid 5A, the package can be designed to be resealable.

In the inner space of the mug 3, the food product 2 is included, in dry form. Herein, dry is understood to mean at least, but not exclusively, non-liquid, with a relatively low percentage of moisture, for instance less than a few percents by weight, more particularly less than 1% and in particular at least partly in powder form. Owing to the dry condition, a food product according to the invention can have a relatively long shelf life, be lightweight and the consistency of the food product, in particular of solid parts, can be maintained. Furthermore, as the case may be, the crispiness of the food product can be maintained better. A food product 2 according to the invention comprises elements 6 having a network of proteins, carbohydrates and/or fats, gelatizined and/or baked, optionally twice-baked. The elements can for instance be cereals 6. The food product further comprises a dairy product 7 in relatively dry form. The dairy product 7 may be provided in or as coating 8 of a product 6, as schematically shown in Fig. 3, as loose product, such as, for instance, powder, as shown in Fig. 1, or a combination thereof. For some dairy products it will apply that they can also be added in relatively solid form, for instance a pressed block or grains, as long as they are soluble in water, in a relatively short time, while forming an at least largely liquid dairy product. In this description, further, as element a cereal 6 will be described unless expressly stated otherwise, but variants thereon having a similar network also fall within the description.

In Fig. 3, a cereal 6 is shown, provided with a coating 8. This coating 8 forms a layer around the cereal 6, airtight and/or moisture-tight or not airtight and/or moisture-tight, and can comprise, for instance, a syrup, and colorants, flavours, sweeteners, such as dextrose and/or glucose and other additives customary in food products such as emulsifiers, adherents and such additives. Furthermore, according to the invention, preferably, a water soluble dairy product 7 is added to the coating 8 before this is applied to the cereals 6, as will be described in further detail.

Preferably, in the food product and/or in the dairy product and/or the coating, oligosaccharides are utilized. After mixture with the liquid, they can be easily digested and are beneficial to the human body, in particular for the intestinal flora, while furthermore, in dry form, good conservation is obtained and hence a long shelf life. This can be, for instance but not exclusively, FOS, GOS and/or inulin.

In the example shown in Fig. 3, as cereal 6, a piece of baked product, in particular a piece of knackebrod is used. Such a cereal 6 is relatively crunchy, brittle or crispy and therefore has a pleasant taste sensation owing to consistency and texture. As the product 2 is preserved dry, this is maintained, at least until it is mixed with an aqueous product such as water, fruit juice or the like, so that the diary product becomes liquid with a relatively low viscosity, for instance as milk, or with a relatively high viscosity, such as yogurt or custard. Naturally, other cereals too can be used, such as other (once or twice) baked products, to which, optionally, other edible objects such as popped cereals and the like, but also bits of fruit, grains or parts thereof, currants or raisins and the like can be utilized. Coating of the cereals protects them against moisture, at least for as long as a consumer has not added liquid.

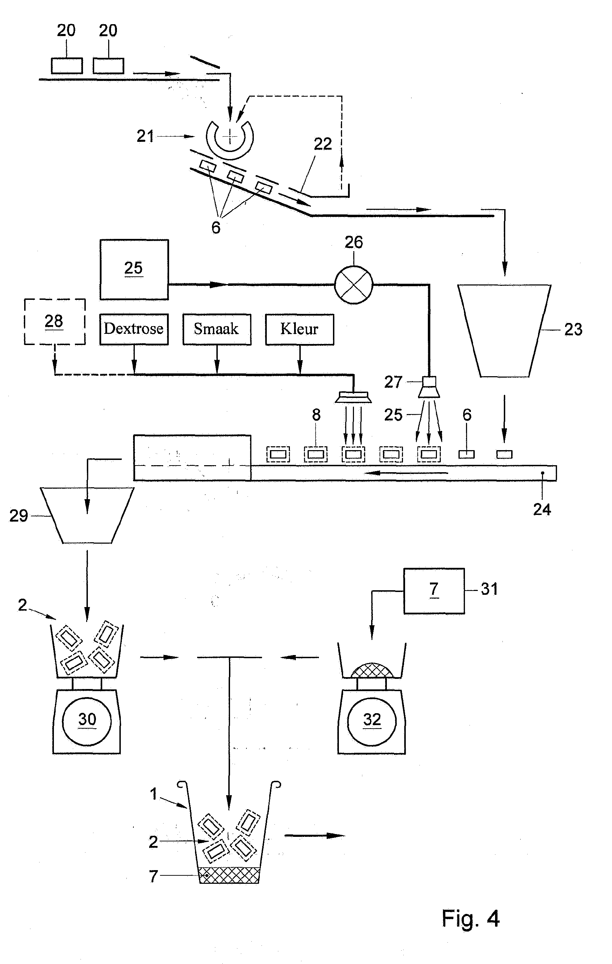

Fig. 4 schematically shows a production process and production apparatus for a food product according to the invention, at least for coated cereals which can be used as such or therein. Here, the starting point are relatively large cereals 20 or other baked products, such as strips of knackebrod. Naturally, the starting point could also be cereals formed as pieces.

In a first phase, the large cereals 20 are reduced to cereals 6 of smaller sizes, for instance some millimetres to approximately 1 or 1.5 centimetres. To that end, for instance a breaker 21 can be used. The large cereals 20 can for instance be slices provided with scores, as to form comparable to, for instance, a chocolate bar, along which scores the large cereal 20 can be divided into small cereals 6. In the scores, the network will be exposed. Then, if desired, in a second phase, the cereals 6 will be sieved by a sieve 22, so that a desired distribution to size is obtained. Then, in a third phase, the cereals 6 are supplied by a dosing unit 23 to a conveying apparatus 24 whereupon a heated syrup 25 is sprayed on the cereals with a spraying device 27, via a heat exchanger 26. Furthermore, sweeteners such as dextrose, flavours and/or colorants can be added. As a result, in a fourth phase, a coating 8 is formed on the cereals 6. Therefore, the cereals 6 are panned. This coating protects the cereals 6 substantially against entering moisture, so that also after addition of a liquid such as water, the crispiness of the cereals is maintained for a longer period of time.

Optionally, a diary product 28 can be added to the coating 8. This may be milk powder or yogurt powder.

After panning of the cereals 6, they are dried and/or cooled and, in a fifth phase, poured into a storage device 29, whence they are poured, via a weighing device 30, in a desired amount into a package 1. In the same package, preferably also from a second storage device 31, dairy product 7 in dry form, for instance milk powder or yogurt powder, is introduced into the same package 1, in an amount measured with the aid of a weighing device 32, whereupon the package 1 is sealed and carried off.

As indicated in Fig. 1 in a drawn line I, a relatively small volume of dairy product 7 can be added, for instance in case of milk powder, in a mug in which, for instance, approximately 100 ml water can be added for obtaining a liquid milk, or, as indicated in Fig. 1 in interrupted lines II, a larger amount of dairy product, for instance yogurt powder, in a mug in which approximately 100 ml water can be added for obtaining a relatively high viscous yogurt.

The coating 8 can be somewhat hydrophobic, so that also in the liquid formed with the milk product, the coating remains at least largely around the cereal, whereby the consistency thereof is maintained even better. However, the coating can also be water-soluble, so that a stronger mixture is obtained and the cereals can at least partly take up the water and/or the dairy product. Herein, yogurt powder is understood to include at least, but not exclusively, spray-dried yogurt, in particular spray-dried semi-skimmed or skimmed yogurt, comprising, for instance, lactose, protein, ash, fat and little to no moisture. Also, oligosaccharides can be included, for instance added. Also, other additives can be added to a dairy product for use within the invention, such as emulsifiers, vitamins, minerals, flavours and odorants or other food supplements.

It is preferred that the moisture content in the dairy product is smaller than 10%, more particularly less than 7%, and preferably less than 5%, for instance approximately 3%.

As a result, the good bacterial properties of the dairy product are preserved for a long period of time, while furthermore, the crunchiness of the cereals is not lost because the moisture is retained in the powder.

Yogurt powder is described in, for instance, FR2750298, JP2286039 and GB2300699. In DE2024018, a Bulgarian yogurt in powder form is described. These publications are mentioned here merely by way of example.

The invention is not limited in any manner to the embodiments given in the description. Many variations thereon are possible within the framework of the invention as outlined by the claims.

## Claims

1. A food product, comprising a series of elements having a network of proteins, carbohydrates and/or fats, gelatinized and/or stabilized, and a dairy product in dry form, which dairy product is at least largely soluble in water.

2. A food product according to claim 1, wherein the elements have been baked and/or have risen.

3. A food product according to claim 1 or 2, wherein the series of elements comprise cereals.

4. A food product according to any one of the preceding claims, wherein said dairy product is at least partly provided on the elements as or in a coating.

5. A food product according to any one of the preceding claims, wherein said dairy product is at least partly provided in powder form.

6. A food product according to any one of the preceding claims, wherein said elements are crispy elements, manufactured in particular as or from baked dough product.

7. A food product according to claim 6, wherein said elements comprise pieces of knackebrod.

8. A food product according to any one of the preceding claims, wherein said dairy product comprises milk powder and/or yogurt powder.

9. A food product according to any one of the preceding claims, wherein at least a part of said elements is provided with a coating which screens the elements at least partly from moisture.

10. A food product according to any one of the preceding claims, wherein at least a part of said elements, in particular cereals, is provided with a coating which comprises at least a sweetener and said dairy product, while, further, dairy product is provided in loose form, in particular as powder.

11. A food product according to any one of the preceding claims, wherein the elements without optional coating constitute more than 25% by weight of said food product and said dairy product constitutes at least 10% by weight thereof.

12. A package having therein a food product according to any one of the preceding claims.

13. A package according to claim 12, wherein said food product is included in the package relatively dry.

14. A package according to claim 12 or 13, wherein the package comprises a mug, in particular manufactured from plastic or coated cardboard.

15. A food product, in particular cereal, provided with a coating which comprises at least a dairy product in a water-soluble form.

16. A food product according to claim 15, wherein the coating further comprises at least a sweetener, such as glucose or dextrose.

17. A food product, in particular according to claim 15 or 16, wherein the product is a baked dough product or is manufactured therefrom and is provided with a coating which comprises at least said dairy product and/or said sweetener.

18. A method for offering a food product, wherein in a closed package a mixture of at least an amount of cereals and a dairy product in relatively dry form is offered.

19. A method according to claim 18, wherein the food product is offered in a package which, after opening, defines a drinking opening and a watertight mug.

20. A method for forming a food product, wherein elements, in particular cereals, are manufactured, which are provided with a coating which comprises at least a dairy product in a water-soluble form, in particular a powder form, and further, preferably comprises a sweetener, whereupon the coated elements are confined in a package, in relatively dry form.

21. A method according to claim 20, wherein the elements are formed as or from a baked dough product, in particular knackebrod.
